# EUROPÄISCHE PATENTSCHRIFT

(11) **EP 2 940 414 B1**
(45) Veröffentlichungstag und Bekanntmachung des Hinweises auf die Patenterteilung: **01.11.2017**
(21) Anmeldenummer: 14166375.7
(22) Anmeldetag: 29.04.2014
(51) Int. Cl.: F26B 17/08, F26B 21/08, F26B 25/22, A23B 7/02

(54) **Verfahren und Vorrichtung zum Trocknen von pflanzlichen Produkten**
Method and device for drying plant products
Procédé et dispositif de séchage de produits végétaux

(43) Veröffentlichungstag der Anmeldung: 04.11.2015
(73) Patentinhaber: ESG Kräuter GmbH, 86663 Asbach-Bäumenheim (DE)
(72) Erfinder: Schiele, Erhard, 86609 Donauwörth (DE)
(74) Vertreter: Meissner Bolte Partnerschaft mbB

(56) Entgegenhaltungen:
- EP-A1- 0 593 887
- WO-A1-92/10946
- WO-A1-2009/105039
- WO-A2-01/77630
- WO-A2-96/07070
- DE-A1- 1 729 401
- J M Goepfert ET AL: "Relation of the Heat Resistance of Salmonellae to the Water Activity of the Environment1", American Society for Microbiology, 1. März 1970 (1970-03-01), XP055143637, Gefunden im Internet: URL:http://www.ncbi.nlm.nih.gov/pmc/articl es/PMC376705/pdf/applmicro00101-0047.pdf [gefunden am 2014-09-30]

## Beschreibung

### 1. Gebiet der Erfindung

Die vorliegende Erfindung betrifft ein Verfahren zur Trocknung von pflanzlichen Produkten, insbesondere von Kräutern.

### 2. Hintergrund

Im Stand der Technik werden zu trocknende Kräuter, üblicherweise zunächst mechanisch aufbereitet (gesiebt, geschnitten, etc.) und anschließend in Trocknern getrocknet. Zur Trocknung werden die aufbereiteten Kräuter zunächst in einem Vortrockner mit einem Luftstrom, der üblicherweise eine Temperatur von ca. 140°C aufweist, von ca. 20°C auf ca. 60°C erwärmt. Anschließend werden die Kräuter in einem Haupttrockner auf eine Temperatur zwischen 90°C und 100°C erwärmt. Der Wassergehalt der Kräuter wird dabei von anfänglich ca. 85% auf ca. 4% am Ende der Trocknung abgesenkt.

In der Praxis hat sich nunmehr gezeigt, dass die durch ein derartiges Verfahren erhaltenen Produkte teilweise relativ hohe mikrobielle Belastungen (insbesondere auf den Produktoberflächen) aufweisen. Darüber hinaus sind die derart erhaltenen Produkte verbesserungswürdig hinsichtlich ihrer Qualität, insbesondere bezüglich Farbe, Geruch und Geschmack.

Ausgehend von diesem Stand der Technik stellt sich die vorliegende Erfindung die Ausgabe, ein neues Verfahren zur Trocknung von pflanzlichen Produkten bereitzustellen, mit dem ein mikrobiologisch sichereres Produkt bereitgestellt werden kann, d.h. ein Produkt mit einer möglichst geringen Keimbelastung. Weiterhin stellt sich die vorliegende Erfindung die Aufgabe, ein Verfahren zur Trocknung von pflanzlichen Produkten bereitzustellen, mit dem ein im Vergleich zum Stand der Technik verbessertes Produkt hinsichtlich Farbe, Aroma und Textur bereitgestellt werden kann.

Diese und andere Aufgaben, die beim Lesen der folgenden Beschreibung noch genannt werden oder vom Fachmann erkannt werden können, werden durch den Gegenstand des unabhängigen Anspruchs 1 gelöst. Die abhängigen Ansprüche bilden dabei den zentralen Gedanken der vorliegenden Erfindung in besonders vorteilhafter Weise weiter.

### 3. Ausführliche Beschreibung der Erfindung

Ein erfindungsgemäßes Verfahren zur Trocknung von pflanzlichen Produkten, insbesondere von Kräutern, umfasst die folgenden Schritte: Erwärmen des pflanzlichen Produkts mit einem ersten Luftstrom in einer Aufwärmzone, der einer relative Luftfeuchtigkeit von über 80% aufweist, wobei die Temperatur des ersten Luftstroms so gewählt ist, dass der a_{w}-Wert des pflanzlichen Produkts im Wesentlichen konstant gehalten wird; weiteres Erwärmen des pflanzlichen Produkts mit einem zweiten Luftstrom in einer Vortrocknungszone, wobei die Temperatur des Luftstroms so gewählt ist, dass das pflanzliche Produkt auf über 60°C erwärmt wird; weiteres Erwärmen des pflanzlichen Produkts mit einem dritten Luftstrom in einer Haupttrocknungszone, wobei die Temperatur des dritten Luftstroms so gewählt ist, dass das pflanzliche Produkt auf eine Temperatur zwischen 90°C und 100°C erwärmt wird, und wobei die Temperatur des dritten Luftstroms so gewählt ist, dass der a_{w}-Wert des pflanzlichen Produkts auf einen Zielwert gesenkt wird. Der a_{w}-Wert (Wasseraktivität, *,Activity of Water"*) ist ein Maß für frei verfügbares Wasser in einem Material. Der a_{w}-Wert ist dabei definiert als Quotient des Wasserdampfdrucks über einem Material (p) zu dem Wasserdampfdruck über reinem Wasser (pₒ) bei einer bestimmten Temperatur. Somit ergibt sich folgendes Verhältnis: a_{w} = p/pₒ. Grundsätzlich ist bekannt, dass die Wärmeresistenz von Mikroorganismen im hohen Maße vom Wassergehalt bzw. von vom a_{w}-Wert abhängig ist. Beispielsweise ist die Hitzeresistenz von *Bacillus subtilis* Sporen bei einem a_{w}-Wert von 0,2 um das 10⁸-fache höher als deren Hitzeresistenz bei einem a_{w}-Wert von 1. Das Maximum der Hitzeresistenz für fast alle Arten von Sporen liegt typischerweise bei a_{w}-Werten zwischen 0,2 bis 0,4. Mit anderen Worten können die meisten Sporen nicht mehr wirksam vernichtet werden, sobald der a_{w}-Wert einen bestimmten Wert unterschreitet. Zwar ist auch bei dem im Stand der Technik bekannten Trocknungsverfahren der Wassergehalt des pflanzlichen Produkts anfänglich auf über 80%, jedoch erscheint die sehr schnelle Absenkung des Wassergehalts, und damit das sehr schnelle Absenken des a_{w}-Werts nicht geeignet zu sein, um das pflanzliche Produkt zuverlässig von mikrobieller Belastung zu befreien.

Nach Durchführung einer Vielzahl von Experimenten hat sich gezeigt, dass die mikrobielle Belastung des pflanzlichen Produkts erheblich gesenkt werden kann, wenn vor dem Erwärmen des pflanzlichen Produkts in einer Vortrocknungszone (d.h. bevor das pflanzliche Produkt mit einer Temperatur beaufschlagt wird, die zur Zerstörung der Mikroorganismen geeignet ist, beispielsweise einer Temperatur von über 70°C) in einer Aufwärmzone zunächst schonend mittels einer deutlich niedrigeren Temperatur erwärmt wird, wobei in der Aufwärmzone der a_{w}-Wert des pflanzlichen Produkts möglichst konstant gehalten wird. Mit anderen Worten wird das pflanzliche Produkt zunächst mit einem hohen a_{w}-Wert auf eine Temperatur nahe der für die meisten Mikroorganismen letalen Temperatur erwärmt. Erst dann wird das pflanzliche Produkt in der Vortrocknungszone möglichst schnell über die für Mikroorganismen letale Temperatur weiter erwärmt. Anschließend wird das pflanzliche Produkt, das nunmehr nur noch eine vergleichsweise geringe mikrobielle Belastung aufweist, in der Haupttrocknungszone weiter erwärmt, so dass der Wassergehalt und damit der a_{w}-Wert des pflanzlichen Produkts auf einen gewünschten Trocknungsgrad bzw. Zielwert gesenkt wird.

Es hat sich darüber hinaus gezeigt, dass durch ein erfindungsgemäßes Verfahren ein pflanzliches Produkt mit einem farbfrischeren Eindruck und einem deutlich besseren Aroma bereitgestellt werden kann, und dass das pflanzliche Produkt durch das erfindungsgemäße Trocknungsverfahren kaum an Textur verliert.

Vorzugsweise weist der erste Luftstrom eine Temperatur zwischen 50°C und 80°C, besonders bevorzugt zwischen 60°C und 70°C auf, wobei das pflanzliche Produkt durch den ersten Luftstrom vorzugsweise auf eine Temperatur zwischen 30°C und 60°C, weiter bevorzugt zwischen 35°C und 55°C und besonders bevorzugt auf eine Temperatur zwischen 45°C und 50°C erwärmt wird.

Das pflanzliche Produkt wird in den verschiedenen Trocknungszonen vorzugsweise auf gitterartigen Förderbändern geführt, so dass die Luftströme von unten nach oben durch die Förderbänder, und damit durch das pflanzliche Produkt, geführt werden können. Darüber hinaus können in den einzelnen Trocknungszonen geeignete Umwälz- oder Umschichtungseinrichtungen vorgesehen werden, um die Kräuter in regelmäßigen Abständen oder konstant umzuwälzen bzw. umzuschichten. Die verschiedenen Luftströme können dabei in den jeweiligen Trocknungszonen eine im Wesentlichen homogene Temperaturverteilung oder einen Temperaturgradienten aufweisen (beispielsweise kann die Temperatur des ersten Luftstroms am Eingang der Aufwärmzone eine Temperatur von 50°C und am Ausgang der Aufwärmzone eine Temperatur von 80°C aufweisen). Ferner ist es bevorzugt, dass die einzelnen Luftströme durch mehrere Einzelluftströme bereitgestellt werden. Vorteilhafterweise wird der a_{w}-Wert in der Aufwärmzone in einem Bereich zwischen 0,8 und 0,95, vorzugsweise bei ca. 0,9 im Wesentlichen konstant gehalten. Dabei ist es von Vorteil, wenn der erste Luftstrom eine relative Luftfeuchtigkeit von über 9 0% aufweist, vorzugsweise von über 95%. Durch die vergleichsweise hohe relative Luftfeuchtigkeit des ersten Luftstroms kann ein Abtrocknen der Feuchtigkeit aus dem pflanzlichen Produkt in der Aufwärmzone besonders effektiv verhindert bzw. substantiell gesenkt werden, so dass dadurch der a_{w}-Wert des pflanzlichen Produkts in der Aufwärmzone besonders einfach auf einem gewünscht hohen Wert gehalten werden kann.

Vorteilhafterweise wird dem ersten Luftstrom Wasserdampf bzw. Sattdampf hinzugefügt, um die relative Luftfeuchtigkeit des ersten Luftstroms einzustellen. Mit anderen Worten soll der erste Luftstrom möglichst mit Feuchtigkeit gesättigt sein, wobei die Luftfeuchtigkeit vorteilhafterweise nahe dem Taupunkt gehalten wird, um ein Trocknen bzw. eine Wasserabgabe aus dem pflanzlichen Produkt effektiv verhindern zu können. Dabei kann der erste Luftstrom beispielsweis mit Hilfe eines zuschaltbaren Dampferzeugers ausgestattet sein, um dem ersten Luftstrom Sattdampf hinzufügen zu können.

Vorzugsweise wird der erste Luftstrom durch die Abluft der Vortrocknungszone und/oder der Haupttrocknungszone verwenden. Dies hat ferner den Vorteil, dass Aromastoffe, die sich in der Vortrocknungszone bzw. in der Haupttrocknungszone aus dem pflanzlichen Produkt gelöst haben, wieder an das pflanzliche Produkt geführt werden können, so dass das getrocknete pflanzliche Produkt eine vergleichsweise hohe Konzentration an Aromastoffen aufweist.

Weiterhin ist es von Vorteil, wenn die Abluft der Haupttrocknungszone zur Bereitstellung des zweiten Luftstroms verwendet wird. Im Ergebnis kann dadurch ein besonders energieeffizientes Verfahren bereitgestellt werden, da die jeweilige Abluft quasi kaskadenförmig für die jeweils vorgeschalteten Luftströme verwendet werden kann. Durch die Verwendung der Abluft der Haupttrocknungszone und/oder der Vortrocknungszone kann der erste Luftstrom darüber hinaus auf einfache Weise mit einer hohen relativen Luftfeuchtigkeit bereitgestellt werden, da die jeweilige Abluft der nachgeschalteten Trocknungszonen einen hohen Wasseranteil aufweisen und vorzugsweise sogar mit Feuchtigkeit gesättigt sind. Dadurch kann erreicht werden, dass der Wassergehalt des zu trocknenden pflanzlichen Produkts, insbesondere an dessen Oberflächen, an der die mikrobielle Belastung typischerweise am höchsten ist, hoch bzw. konstant gehalten werden kann, was wiederum zu einer effektiven Reduzierung der am pflanzlichen Produkt enthaltenen bzw. anhaftenden Mikroorganismen von Vorteil ist.

Vorteilhafterweise weist der zweite Luftstrom eine Temperatur zwischen 120°C und 150°C auf, vorzugsweise zwischen 130°C und 140°C. Dadurch kann das von der Aufwärmzone herangeführte pflanzliche Produkt, das besonders bevorzugt eine Temperatur von etwa 50°C aufweist, relativ schnell auf eine Temperatur von über 60°C bzw. 70°C geführt werden. Temperaturen von über 60°C bzw. 70°C sind für die meisten Mikroorganismen letal.

Vorzugsweise liegt der Ziel-a_{w}-Wert unter 0,4, besonders bevorzugt unter 0,25 und ganz besonders bevorzugt unter 0,1.

Im Ergebnis hat sich gezeigt, dass durch das erfindungsgemäße Verfahren ein qualitativ sehr hochwertiges und mikrobiell sehr gering belastetes pflanzliches Produkt erhalten werden kann. Durch das erfindungsgemäße Verfahren können im Wesentlichen alle pflanzlichen Produkte getrocknet werden, wobei das vorliegende Verfahren insbesondere zur Trocknung von Kräutern (wie beispielweise Petersilie, Dill, Spinat, Melisse, Schnittlauch, Kresse, Rucola, Pfefferminz, Sellerie, etc.) besonders gut geeignet ist.

Weiterhin betrifft die vorliegende Erfindung getrocknete Kräuter, die mit einem oben erläuterten erfindungsgemäßen Verfahren erhalten wurden. Wie bereits oben erläutert, weisen Kräuter, die mit dem erfindungsgemäßen Verfahren getrocknet wurden, eine verbesserte Textur, einen natürlicheren Farbeindruck , ein deutlich besseres Aroma und insgesamt eine höhere Qualität auf als Kräuter, die mit bekannten Trocknungsverfahren getrocknet wurden.

Ferner betrifft die vorliegende Erfindung eine Vorrichtung zur Durchführung des oben genannten Verfahrens zur Trocknung von pflanzlichen Produkten umfassend: eine Aufwärmzone mit einer Luftzufuhreinrichtung, mit der ein erster Luftstrom bereitstellbar ist, um dadurch ein pflanzliches Produkt zu erwärmen, wobei der a_{w}-Wert des pflanzlichen Produkts in der Aufwärmzone im Wesentlichen konstant gehalten wird; eine Vortrocknungszone mit einer Luftzufuhreinrichtung, mit der ein zweiter Luftstrom bereitstellbar ist, um dadurch das pflanzliche Produkt auf über 60°C weiter zu erwärmen; eine Haupttrocknungszone mit einer Luftzufuhreinrichtung, mit der ein dritter Luftstrom bereitstellbar ist, um dadurch das pflanzliche Produkt auf eine Temperatur zwischen 90°C und 100°C weiter zu erwärmen und um den a_{w}-Wert des pflanzlichen Produkts auf einen Zielwert abzusenken. Vorteilhafterweise weist die Vorrichtung eine erste Luftrückführung auf, um die Abluft der Vortrocknungszone und/oder der Haupttrocknungszone zur Bereitstellung des ersten Luftstroms zu verwenden. Dadurch kann auf besonders einfache Weise gewährleistet werden, dass der erste Luftstrom eine gewünscht hohe relative Luftfeuchtigkeit aufweist. Weiterhin ist es von Vorteil, wenn die Vorrichtung eine zweite Luftrückführung umfasst, um die Abluft der Haupttrocknungszone zur Bereitstellung des zweiten Luftstroms zu verwenden. Wie oben bereits angemerkt, kann dadurch ein besonders energieeffizientes Verfahren bzw. eine besonders energieeffizientes Vorrichtung bereitgestellt werden.

Weiterhin ist es von Vorteil, wenn in der ersten und/oder in der zweiten Luftrückführung Abluftöffnungen vorgesehen sind, um die Luftrückführung und dadurch die relative Luftfeuchtigkeit des ersten und/oder des zweiten Luftstroms zu regeln. Dadurch besteht auch die Möglichkeit, die erfindungsgemäße Vorrichtung ebenfalls zur Trocknung von pflanzlichen Produkten zu verwenden, die eine Luftströmung mit nur geringer Luftfeuchtigkeit erfordern. Mit anderen Worten besteht dadurch die Möglichkeit, die erfindungsgemäße Vorrichtung im Wesentlichen in bekannter Weise zu betreiben und die Abluft der Vortrocknungszone und/oder der Haupttrocknungszone aus dem System mittels der Abluftöffnungen entweichen zu lassen.

### 4. Beschreibung bevorzugter Ausführungsformen

Nachfolgend wird eine detaillierte Beschreibung der bevorzugten Ausführungsformen eines erfindungsgemäßen Verfahrens zur Trocknung von pflanzlichen Produkten und der bevorzugten Ausführungsformen von Vorrichtungen zur Durchführen eines erfindungsgemäßen Verfahrens mit Bezug auf die beiliegenden Figuren gegeben. Darin zeigt:
- **Figur 1**: einen schematischen Aufbau einer ersten bevorzugten Ausführungsform einer erfindungsgemäßen Vorrichtung zur Durchführung eines erfindungsgemäßen Verfahrens;
- **Figur 2**: einen schematischen Aufbau einer zweiten bevorzugten Ausführungsform einer erfindungsgemäßen Vorrichtung zur Durchführung eines erfindungsgemäßen Verfahrens.

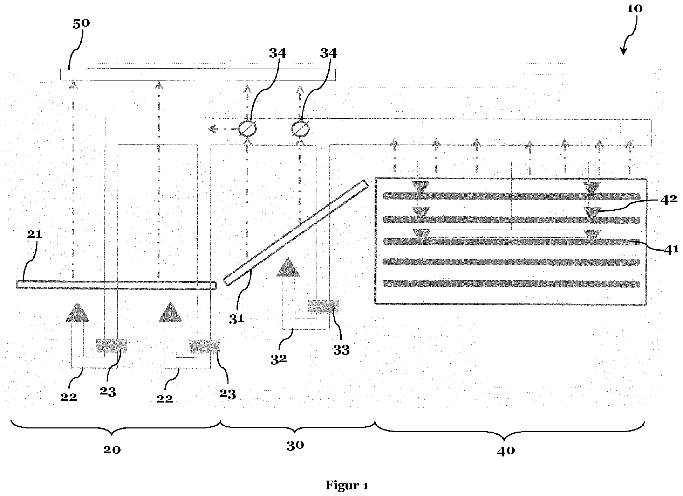

Figur 1 zeigt eine erste Ausführungsform erfindungsgemäße Vorrichtung 10 zum Trocknen eines pflanzlichen Produkts, insbesondere von Kräutern.

Die Vorrichtung 10 umfasst eine Aufwärmzone 20, eine Vortrocknungszone 30 und eine Haupttrocknungszone 40. Das zu trocknende pflanzliche Produkt (nicht gezeigt) wird vorzugsweise mittels gitterartiger Förderbänder 21, 31, 41 von der Aufwärmzone 20 zunächst in die Vortrocknungszone 30 und abschließend in die Haupttrocknungszone 40 geführt. Das pflanzliche Produkt liegt dabei auf den Förderbändern 21, 31, 41 auf und wird in der gezeigten bevorzugten Ausführungsform von unten nach oben von den jeweiligen Luftströmen durchströmt. In der Haupttrocknungszone 30 kann die Luftzufuhr einerseits vom Bodenbereich der Haupttrocknungszone 30 erfolgen, als auch zusätzlich oder alternativ seitlich in die vorzugsweise mäanderförmig geführten Förderbänder 41 eingeblasen werden. Die mäanderförmig verlaufenden Förderbänder 41 der Haupttrocknungszone 40 können vorzugsweise einzeln oder in Gruppen mit Trockenluft beaufschlagt werden, wobei diese vorzugsweise einzeln hinsichtlich ihrer Temperatur- und Luftmenge eingestellt werden können. Optional können Umwälzeinrichtungen (nicht gezeigt) das pflanzliche Produkt regelmäßig oder kontinuierlich umwälzen bzw. umschichten, so dass das pflanzliche gleichmäßig von den jeweiligen Luftströmen beaufschlagt werden kann.

Das pflanzliche Produkt wird nach mechanischer Aufbereitung auf das Förderband 21 der Aufwärmzone 20 aufgebracht. Dabei weist das pflanzliche Produkt typischerweise eine (Eingangs-)Temperatur von etwa 20°C und einen a_{w}-Wert zwischen 0,8 und 0,99, vorzugsweise von etwa 0,95, auf.

In der Aufwärmzone 20 wird das pflanzliche Produkt mit einem ersten Luftstrom 22 erwärmt. Der erste Luftstrom 22 weist eine Temperatur zwischen 50°C und 80°C, bevorzugt eine Temperatur zwischen 60°C und 70°C auf.

Der erste Luftstrom 22 wird in der gezeigten bevorzugten Ausführungsform der Vorrichtung 10 durch die Abluft aus der Vortrocknungszone 30 und der Haupttrocknungszone 40 bereitgestellt. Wie in Figur 1 gezeigt, kann der erste Luftstrom 22 durch mehrere Einzelluftströme bereitgestellt werden, wobei der erste Luftstrom 22 alternativ auch durch einen einzigen Luftstrom bereitgestellt werden kann. Beispielsweise kann einer der Einzelluftströme durch Abluft aus der Vortrocknungszone 30 und einer der Einzelluftströme durch eine Mischung aus der Abluft aus der Haupttrocknungszone 40 und der Vortrocknungszone 30 bereitgestellt werden.

Der erste Luftstrom 22 weist eine relative Luftfeuchtigkeit von über 80%, vorzugsweise von über 90% und besonders bevorzugt von über 95% auf. Diese hohe relative Luftfeuchtigkeit des ersten Luftstroms 22 kann üblicherweise bereits durch die Abluft der Haupttrocknungszone 40 und/oder der Vortrocknungszone 30 bereitgestellt werden. Optional kann zusätzlich oder in Ausführungsformen ohne Rückführung der Abluft der Haupttrocknungszone 40 und der Vortrocknungszone 30, ein Dampferzeuger zur Abgabe von Sattdampf in den ersten Luftstrom 22 bereitgestellt werden. Im Ergebnis ist es bevorzugt, dass der erste Luftstrom 22 möglichst mit Feuchtigkeit gesättigt ist und die nahe am Taupunkt gehalten wird, um ein Antrocknen bzw. eine Wasserabgabe aus dem pflanzlichen Produkt effektiv verhindern zu können. Die Abluft aus der Aufwärmzone 20 hat typischerweise noch eine Temperatur zwischen 20°C und 40°C, vorzugsweise von etwa 30°C und eine relative Luftfeuchtigkeit von noch etwa 65% bis 90%.

Durch den ersten Luftstrom 22 wird das pflanzliche Produkt auf eine Temperatur zwischen 30°C und 60°C erwärmt, vorzugsweise auf eine Temperatur zwischen 35°C und 55°C und besonders bevorzugt auf eine Temperatur zwischen 45°C und 50°C. Die Verweildauer des pflanzlichen Produkts in der Aufwärmzone 20 (bestimmt durch die Länge und die Geschwindigkeit des Förderbands 21) kann je nach zu trocknendem pflanzlichen Produkt bzw. je nach der sich in der Vorrichtung befindlichen Wasserbeladung angepasst werden. Dies gilt ebenfalls für die Verweildauer des pflanzlichen Produkts in der Vortrocknungszone 30 und in der Haupttrocknungszone 40.

Im Anschluss an die Aufwärmzone 20 wird das pflanzliche Produkt in der Vortrocknungszone 30 mittels eines weiteren Förderbands 31 geführt und dabei, wiederum von unten nach oben, durch einen zweiten Luftstrom 32 weiter erwärmt.

Der zweite Luftstrom 32 weist dabei eine Temperatur zwischen 120°C und 150°C, bevorzugt zwischen 130°C und 140°C auf, so dass das pflanzliche Produkt möglichst schnell - und dabei noch einen relativ hohen a_{w}-Wert aufweisend - auf eine Temperatur über 60°C bzw. über 70°C erwärmt wird. Diese Temperatur ist bei dem noch relativ hohen a_{w}-Wert letal für die meisten Mikroorganismen.

Wie in Figur 1 zu erkennen, wird der zweite Luftstrom 32 in der gezeigten bevorzugten Ausführungsform der Vorrichtung 10 durch die Abluft aus der Haupttrocknungszone 40 bereitgestellt. Mit anderen Worten wird zumindest ein Teil der Abluft der Haupttrocknungszone 40 kaskadenförmig zunächst in die Vortrocknungszone 30 und anschließend in die Aufwärmzone 20 geführt, so dass die Wärmeenergie des Systems besonders effizient genutzt wird. Am Ende der Vortrocknungszone 30 weist das pflanzliche Produkt typischerweise noch einen a_{w}-Wert von etwa 0,8 auf. Die Abluft der Vortrocknungszone 30, die zumindest teilweise für den ersten Luftstrom 22 verwendet wird, weist typischerweise noch eine Temperatur von etwa 70°C auf.

Nach der Vortrocknungszone 30 wird das pflanzliche Produkt in die Haupttrocknungszone 40 geführt und dort mit einem dritten Luftstrom 42 beaufschlagt. Wie oben bereits angemerkt, kann die die Luftzufuhr in der Haupttrocknungszone 40 einerseits aus dem Bodenbereich erfolgen, als auch zusätzlich oder alternativ seitlich in die mäanderförmig geführten Förderbänder 41 eingeblasen werden. Die Trocknung in der Haupttrocknungszone 40 reduziert den a_{w}-Wert des pflanzlichen Produkts schließlich auf einen gewünschten Ziel-a_{w}-Wert, der vorzugsweise unter 0,4, bzw. unter 0,25 und besonders bevorzugt unter 0,1 liegt.

Wie in Figur 1 weiterhin gezeigt, können zur Erwärmung der Luftströme 22, 32 optional Wärmetauscher 23, 33 vorgesehen sein, um die Luftströme 22, 32 zusätzlich oder alternativ auf eine gewünschte Temperatur zu erwärmen. Auch kann durch die an der Aufwärmzone 20 vorgesehen Wärmetauscher 23 ein Betrieb der Vorrichtung 10 ohne Rückführung der Abluft der Vorwärmezone 30 bzw. der Haupttrocknungszone 40 ermöglicht werden. Für einen solchen Betrieb sind weiterhin Schieber 34 vorgesehen, die die Abluft der Vortrocknungszone 20 und/oder die Abluft der Haupttrocknungszone 40 aus der Vorrichtung über entsprechende Abluftöffnungen 50 führen können. Die optional vorgesehenen Schieber 34 ermöglichen darüber hinaus eine Einstellung der relativen Luftfeuchtigkeit des ersten Luftstroms 22, indem beispielsweise ein Teil der Abluft der Vortrocknungszone 30 und/oder der Haupttrocknungszone 40 aus der Vorrichtung 10 entfernt wird.

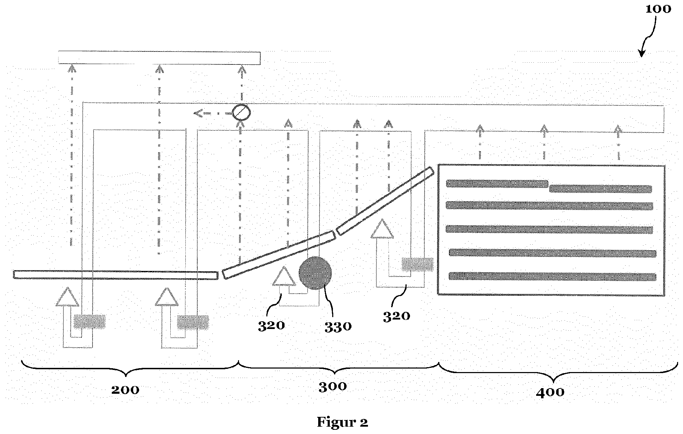

Figur 2 zeigt eine weitere bevorzugte Ausführungsform einer erfindungsgemäßen Vorrichtung 100 zur Trocknung von pflanzlichen Produkten. Die Vorrichtung 100 weist ebenfalls eine Aufwärmzone 200, eine Vortrocknungszone 300 und eine Haupttrocknungszone 400 auf. Im Unterschied zur in Figur 1 gezeigten Vorrichtung 10 ist die Vortrocknungszone 300 der Vorrichtung 100 zweigeteilt, mit einem zweiten Luftstrom 320, der aus zwei Einzelluftströmen besteht, aufgebaut, wobei im ersten Teil der Vortrocknungszone 300 ein weiterer Wärmetauscher 330 in Form eines Brenners vorgesehen, der den zweiten Luftstrom 320 vorzugsweise auf eine Temperatur zwischen 130°C und 140° erwärmt.

Die vorliegende Erfindung ist nicht auf die vorhergehenden Ausführungsbeispiele beschränkt, solange sie vom Gegenstand der folgenden Ansprüche umfasst ist. So können die jeweiligen Luftströme unterschiedlich durch die jeweiligen Trocknungszonen geführt werden. Ferner können weitere Schieber, Wärmetauscher, Dampferzeuger, etc. vorgesehen werden, um die Luftströme auf die nachfolgend beanspruchten Werte (insbesondere bzgl. Temperatur, relativer Luftfeuchtigkeit, etc.) einzustellen.

## Patentansprüche

1. Verfahren zur Trocknung von pflanzlichen Produkten, insbesondere von Kräutern, umfassend die Schritte:
- Erwärmen des pflanzlichen Produkts mit einem ersten Luftstrom (22) in einer Aufwärmzone (20; 200), der eine relative Luftfeuchtigkeit von über 80% aufweist, wobei die Temperatur des ersten Luftstroms (22) so gewählt ist, dass der a_{w}-Wert des pflanzlichen Produkts im Wesentlichen konstant gehalten wird;
- weiteres Erwärmen des pflanzlichen Produkts mit einem zweiten Luftstrom (32; 320) in einer Vortrocknungszone (30; 300), wobei die Temperatur des zweiten Luftstroms (32; 320) so gewählt ist, dass das pflanzliche Produkt auf über 60°C erwärmt wird;
- weiteres Erwärmen des pflanzlichen Produkts mit einem dritten Luftstrom (42) in einer Haupttrocknungszone (40; 400), wobei die Temperatur des dritten Luftstroms (42) so gewählt ist, dass das pflanzliche Produkt auf eine Temperatur zwischen 90°C und 100°C erwärmt wird und wobei die Temperatur des dritten Luftstroms (42) so gewählt ist, dass der a_{w}-Wert des pflanzlichen Produkts auf einen Zielwert gesenkt wird.

2. Verfahren nach Anspruch 1, wobei der erste Luftstrom (22) eine Temperatur zwischen 50°C und 80°C aufweist.

3. Verfahren nach einem der Ansprüche 1 oder 2, wobei das pflanzliche Produkt durch den ersten Luftstrom (22) auf eine Temperatur zwischen 30°C und 60°C, vorzugsweise zwischen 35°C und 55°C und weiterhin bevorzugt auf eine Temperatur zwischen 45°C und 50°C erwärmt wird.

4. Verfahren nach einem der vorhergehenden Ansprüche, wobei der a_{w}-Wert des pflanzlichen Produkts in der Aufwärmzone (20; 200) in einem Bereich zwischen 0,8 und 0,99, vorzugsweise bei ca. 0,95 gehalten wird.

5. Verfahren nach einem der vorhergehenden Ansprüche, wobei der erste Luftstrom (22) eine relative Luftfeuchtigkeit von über 90% und besonders bevorzugt von über 95% aufweist.

6. Verfahren nach einem der vorhergehenden Ansprüche, wobei dem ersten Luftstrom (22) Sattdampf hinzugefügt wird, bevor dieser an das pflanzliche Produkt geführt wird, um die relative Luftfeuchtigkeit des ersten Luftstroms (22) einzustellen.

7. Verfahren nach einem der vorhergehenden Ansprüche, wobei die Abluft der Vortrocknungszone (30; 300) und/oder der Haupttrocknungszone (40; 400) zur Bereitstellung des ersten Luftstroms (22) verwendet wird.

8. Verfahren nach einem der vorhergehenden Ansprüche, wobei die Abluft der Haupttrocknungszone (40; 400) zur Bereitstellung des zweiten Luftstroms (32; 320) verwendet wird.

9. Verfahren nach einem der vorhergehenden Ansprüche, wobei der zweite Luftstrom (32; 320) eine Temperatur zwischen 120°C und 150°C, vorzugsweise zwischen 130°C und 140°C aufweist.

10. Verfahren nach einem der vorhergehenden Ansprüche, wobei die Temperatur des zweiten Luftstroms (32; 320) so gewählt ist, dass das pflanzliche Produkt auf über 70°C erhitzt wird.

11. Verfahren nach einem der vorhergehenden Ansprüche, wobei der Ziel-a_{w}-Wert unter 0,4, vorzugsweise unter 0,25 und besonders bevorzugt unter 0,1 liegt.

12. Verfahren nach einem der vorhergehenden Ansprüche, wobei das pflanzliche Produkt während des Trocknens umgewälzt wird.

## Claims

1. Method for drying plant products, in particular herbs, comprising the steps of:
- heating the plant product with a first air stream (22) in a heating zone (20; 200) which has a relative air humidity of over 80%, wherein the temperature of the first air stream (22) is selected in such a way that the a_{w} value of the plant product is kept substantially constant;
- further heating the plant product with a second air stream (32; 320) in a pre-drying zone (30; 300), wherein the temperature of the second air stream (32; 320) is selected in such a way that the plant product is heated to above 60°C;
- further heating the plant product with a third air stream (42) in a main drying zone (40; 400), wherein the temperature of the third air stream (42) is selected in such a way that the plant product is heated to a temperature between 90°C and 100°C, and wherein the temperature of the third air stream (42) is selected in such a way that the a_{w} value of the plant product is lowered to a target value.

2. Method according to Claim 1, wherein the first air stream (22) has a temperature between 50°C and 80°C.

3. Method according to either of Claims 1 and 2, wherein the plant product is heated by the first air stream (22) to a temperature between 30°C and 60°C, preferably between 35°C and 55°C, and more preferably to a temperature between 45°C and 50°C.

4. Method according to one of the preceding claims, wherein the a_{w} value of the plant product in the heating zone (20; 200) is kept in a range between 0.8 and 0.99, preferably at approx. 0.95.

5. Method according to one of the preceding claims, wherein the first air stream (22) has a relative air humidity of over 90%, and particularly preferably of over 95%.

6. Method according to one of the preceding claims, wherein saturated steam is added to the first air stream (22), before the latter is guided to the plant product, in order to adjust the relative air humidity of the first air stream (22).

7. Method according to one of the preceding claims, wherein the waste air of the pre-drying zone (30; 300) and/or of the main drying zone (40; 400) is used for providing the first air stream (22).

8. Method according to one of the preceding claims, wherein the waste air of the main drying zone (40; 400) is used for providing the second air stream (32; 320).

9. Method according to one of the preceding claims, wherein the second air stream (32; 320) has a temperature between 120°C and 150°C, preferably between 130°C and 140°C.

10. Method according to one of the preceding claims, wherein the temperature of the second air stream (32; 320) is selected in such a way that the plant product is heated to above 70°C.

11. Method according to one of the preceding claims, wherein the target a_{w} value is below 0.4, preferably below 0.25, and particularly preferably below 0.1.

12. Method according to one of the preceding claims, wherein the plant product is turned over during the drying.

## Revendications

1. Procédé de séchage de produits végétaux, en particulier de fines herbes, comprenant les étapes suivantes:
- chauffer le produit végétal avec un premier courant d'air (22) dans une zone de chauffage (20; 200), qui présente une humidité relative de l'air de plus de 80 %, dans lequel on choisit la température du premier courant d'air (22) de telle manière que la valeur a_{w} du produit végétal soit maintenue essentiellement constante;
- chauffer de nouveau le produit végétal avec un deuxième courant d'air (32; 320) dans une zone de pré-séchage (30; 300), dans lequel on choisit la température du deuxième courant d'air (32; 320) de telle manière que le produit végétal soit chauffé à plus de 60°C;
- chauffer de nouveau le produit végétal avec un troisième courant d'air (42) dans une zone de séchage principale (40; 400), dans lequel on choisit la température du troisième courant d'air (42) de telle manière que le produit végétal soit chauffé à une température comprise entre 90°C et 100°C et dans lequel on choisit la température du troisième courant d'air (42) de telle manière que la valeur a_{w} du produit végétal soit abaissée à une valeur cible.

2. Procédé selon la revendication 1, dans lequel le premier courant d'air (22) présente une température comprise entre 50°C et 80°C.

3. Procédé selon une des revendications 1 ou 2, dans lequel on chauffe le produit végétal par le premier courant d'air (22) à une température comprise entre 30°C et 60°C, de préférence entre 35°C et 55°C, et de préférence encore à une température comprise entre 45°C et 50°C.

4. Procédé selon l'une quelconque des revendications précédentes, dans lequel on maintient la valeur a_{w} du produit végétal dans la zone de chauffage (20; 200) dans une plage comprise entre 0,8 et 0,99, de préférence à environ 0,95.

5. Procédé selon l'une quelconque des revendications précédentes, dans lequel le premier courant d'air (22) présente une humidité relative de l'air de plus de 90 % et de préférence encore de plus de 95 %.

6. Procédé selon l'une quelconque des revendications précédentes, dans lequel on ajoute au premier courant d'air (22) de la vapeur saturée, avant que celui-ci soit conduit sur le produit végétal, afin de régler l'humidité relative de l'air du premier courant d'air (22).

7. Procédé selon l'une quelconque des revendications précédentes, dans lequel on utilise l'air d'échappement de la zone de pré-séchage (30; 300) et/ou de la zone de séchage principale (40; 400) pour la préparation du premier courant d'air (22).

8. Procédé selon l'une quelconque des revendications précédentes, dans lequel on utilise l'air d'échappement de la zone de séchage principale (40; 400) pour la préparation du deuxième courant d'air (32; 320).

9. Procédé selon l'une quelconque des revendications précédentes, dans lequel le deuxième courant d'air (32; 320) présente une température comprise entre 120°C et 150°C, de préférence entre 130°C et 140°C.

10. Procédé selon l'une quelconque des revendications précédentes, dans lequel on choisit la température du deuxième courant d'air (32; 320) de telle manière que le produit végétal soit chauffé au-dessus de 70°C.

11. Procédé selon l'une quelconque des revendications précédentes, dans lequel la valeur cible a_{w} se situe en dessous de 0,4, de préférence en dessous de 0,25 et de préférence encore en dessous de 0,1.

12. Procédé selon l'une quelconque des revendications précédentes, dans lequel on fait circuler le produit végétal pendant le séchage.
